(19) Europäisches Patentamt
European Patent Office
Office européen des brevets

(11) **EP 3 113 176 B1**

(12) **EUROPEAN PATENT SPECIFICATION**

(45) Date of publication and mention
of the grant of the patent:
**03.04.2019 Bulletin 2019/14**

(51) Int Cl.:
***G10L 15/197*** *(2013.01)*    ***G10L 15/22*** *(2006.01)*

(21) Application number: **16175048.4**

(22) Date of filing: **17.06.2016**

(54) **SPEECH RECOGNITION**

SPRACHERKENNUNG

RECONNAISSANCE DE LA PAROLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2015 KR 20150093653**

(43) Date of publication of application:
**04.01.2017 Bulletin 2017/01**

(73) Proprietor: **Samsung Electronics Co., Ltd.
Gyeonggi-do 16677 (KR)**

(72) Inventors:
  • **YOO, Sang Hyun
    Seoul (KR)**
  • **CHOI, Hee Youl
    Gyeonggi-do (KR)**

(74) Representative: **Grünecker Patent- und
Rechtsanwälte
PartG mbB
Leopoldstraße 4
80802 München (DE)**

(56) References cited:
**EP-A1- 2 905 780    WO-A1-2009/078665**

  • **Alex Graves: "Sequence Transduction with
    Recurrent Neural Networks", , 14 November 2012
    (2012-11-14), pages 1-9, XP055247437, Retrieved
    from the Internet:
    URL:http://arxiv.org/pdf/1211.3711.pdf [retrieved
    on 2016-02-04]**

  • **GRAVES ALEX ET AL: "Speech recognition with
    deep recurrent neural networks", 2013 IEEE
    INTERNATIONAL CONFERENCE ON
    ACOUSTICS, SPEECH AND SIGNAL
    PROCESSING (ICASSP); VANCOUCER, BC;
    26-31 MAY 2013, INSTITUTE OF ELECTRICAL
    AND ELECTRONICS ENGINEERS,
    PISCATAWAY, NJ, US, 26 May 2013 (2013-05-26),
    pages 6645-6649, XP032508511, ISSN: 1520-6149,
    DOI: 10.1109/ICASSP.2013.6638947 [retrieved on
    2013-10-18]**

  • **YAJIE MIAO ET AL: "EESEN: End-to-end speech
    recognition using deep RNN models and
    WFST-based decoding", 2015 IEEE WORKSHOP
    ON AUTOMATIC SPEECH RECOGNITION AND
    UNDERSTANDING (ASRU), 29 July 2015
    (2015-07-29), pages 167-174, XP055287634, DOI:
    10.1109/ASRU.2015.7404790 ISBN:
    978-1-4799-7291-3**

  • **MCGRAW IAN ET AL: "Personalized speech
    recognition on mobile devices", 2016 IEEE
    INTERNATIONAL CONFERENCE ON
    ACOUSTICS, SPEECH AND SIGNAL
    PROCESSING (ICASSP), IEEE, 20 March 2016
    (2016-03-20), pages 5955-5959, XP032901746,
    DOI: 10.1109/ICASSP.2016.7472820 [retrieved on
    2016-05-18]**

  • **Hasim Sak ET AL: "Fast and Accurate Recurrent
    Neural Network Acoustic Models for Speech
    Recognition", , 24 July 2015 (2015-07-24),
    XP055287644, Retrieved from the Internet:
    URL:https://arxiv.org/pdf/1507.06947.pdf
    [retrieved on 2016-07-12]**

EP 3 113 176 B1

**Description**

BACKGROUND

1. Field

This application relates to speech recognition technology.

2. Description of Related Art

When speech recognition systems are embedded in TV sets, set-top boxes, home appliances, and other devices, there is a drawback in that there may not be sufficient computing resources for the embedded speech recognition systems. However, such a drawback is negligible because speech recognition is performed for a limited number of commands in the embedded environment, whereas in a general speech recognition environment, a decoder uses many computing resources to recognize all of the words and combinations thereof that may be used by people. In contrast, in the embedded environment, only given commands of several words to thousands of words need to be recognized.

In a general speech recognition system, after an acoustic model acquires phonetic probabilities from an audio signal, a Hidden Markov Model (HMM) decoder combines these probabilities and converts the probabilities into a sequence of words. However, the HMM decoder requires numerous computing resources and operations, and a Viterbi decoding method used in the HMM decoder may result in a huge loss of information.

From WO2009/078665 an ASR system having a phoneme decoding unit, lexical decoding unit, and acoustic restoring unit is known. This system has a shortcoming in that the recognition rate is not optimal in the case of usage of the device in various circumstances.

It is an object of the invention to overcome the shortcomings in the prior art. This object of the invention is solved by the independent claims. Specific embodiments are defined in the dependent claims.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a speech recognition apparatus includes a probability calculator configured to calculate phoneme probabilities of an audio signal using an acoustic model; a candidate set extractor configured to extract a candidate set from a recognition target list of target sequences; and a result returner configured to return a recognition result of the audio signal based on the calculated phoneme probabilities and the extracted candidate set.

The acoustic model may be trained using a learning algorithm including Connectionist Temporal Classification (CTC).

The result returner may be further configured to calculate probabilities of generating each target sequence included in the candidate set based on the calculated phoneme probabilities, and return a candidate target sequence having a highest probability among the calculated probabilities of generating each target sequence as the recognition result.

The apparatus may further include a sequence acquirer configured to acquire a phoneme sequence based on the calculated phoneme probabilities.

The candidate set extractor may be further configured to calculate similarities between the acquired phoneme sequence and each target sequence included in the recognition target list, and extract the candidate set based on the calculated similarities.

The candidate set extractor may be further configured to calculate the similarities using a similarity algorithm including an edit distance algorithm.

The sequence acquirer may be further configured to acquire the phoneme sequence based on the calculated phoneme probabilities using a best path decoding algorithm or a prefix search decoding algorithm.

In another general aspect, a speech recognition method includes calculating phoneme probabilities of an audio signal using an acoustic model; extracting a candidate set from a recognition target list of target sequences; and returning a recognition result of the audio signal based on the calculated phoneme probabilities and the extracted candidate set.

The acoustic model may be trained using a learning algorithm including Connectionist Temporal Classification (CTC).

The returning of the recognition result may include calculating probabilities of generating each target sequence included in the candidate set based on the calculated phoneme probabilities; and returning a candidate target sequence having a highest probability among the calculated probabilities of generating each target sequence as the recognition result.

The method may further include acquiring a phoneme sequence based on the calculated phoneme probabilities.

The extracting of the candidate set may include calculating similarities between the acquired phoneme sequence and each target sequence included in the recognition target list; and extracting the candidate set based on the calculated similarities.

The calculating of the similarities may include calculating the similarities using a similarity algorithm including an edit distance algorithm.

The acquiring of the phoneme sequence may include acquiring the phoneme sequence based on the calculated phoneme probabilities using a best path decoding algorithm or a prefix search decoding algorithm.

In another general aspect, an electronic device includes a speech receiver configured to receive an audio signal of a user; a speech recognizer configured to calculate phoneme probabilities of the received audio signal using an acoustic model, and based on the calculated phoneme probabilities, return any one of target sequences included in a recognition target list as a recognition result; and a processor configured to perform a specific operation based on the returned recognition result.

The speech recognizer may be further configured to extract a candidate set from the recognition target list, calculate probabilities of generating each candidate target sequence included in the candidate set based on the calculated phoneme probabilities, and return a candidate target sequence having a highest probability among the calculated probabilities of generating each target sequence as the recognition result.

The speech recognizer may be further configured to acquire a phoneme sequence by decoding the phoneme probabilities, and extract the candidate set based on similarities between the acquired phoneme sequence and each target sequence included in the recognition target list.

The processor may be further configured to output the recognition result in a voice from a speaker, or in a text format on a display.

The processor may be further configured to translate the recognition result into another language, and output the translated result in the voice from the speaker, or in the text format on the display.

The processor may be further configured to process commands including one or more of a power on/off command, a volume control command, a channel change command, and a destination search command in response to the recognition result.

In another general aspect, a speech recognition method includes calculating probabilities that portions of an audio signal correspond to speech units; obtaining a set of candidate sequences of speech units from a list of sequences of speech units; and recognizing one of the candidate sequences of speech units as corresponding to the audio signal based on the probabilities.

The calculating of the probabilities may include calculating the probabilities using an acoustic model.

The speech units may be phonemes.

The candidate sequences of speech units may be phrases.

The phrases may be commands to control an electronic device.

The recognizing of the one of the candidate sequences of speech units may include calculating probabilities of generating each of the candidate sequences of speech units based on the probabilities that portions of the audio signal correspond to the speech units; and recognizing one of the candidate sequences of speech units having a highest probability among the probabilities of generating each of the candidate sequences of speech units as corresponding to the audio signal.

Other features and aspects will be apparent from the following detailed description, the drawings, and the claims.

BRIEF DESCRIPTION OF THE DRAWINGS

FIG. 1 is a block diagram illustrating an example of a speech recognition apparatus.

FIG. 2 is a block diagram illustrating another example of a speech recognition apparatus.

FIG. 3 is a flowchart illustrating an example of a speech recognition method.

FIG. 4 is a flowchart illustrating another example of a speech recognition method.

FIG. 5 is a block diagram illustrating an example of an electronic device.

FIG. 6 is a flowchart illustrating an example of a speech recognition method in the electronic device.

Throughout the drawings and the detailed description, the same drawing reference numerals refer to the same elements. The relative size, proportions, and depiction of these elements may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

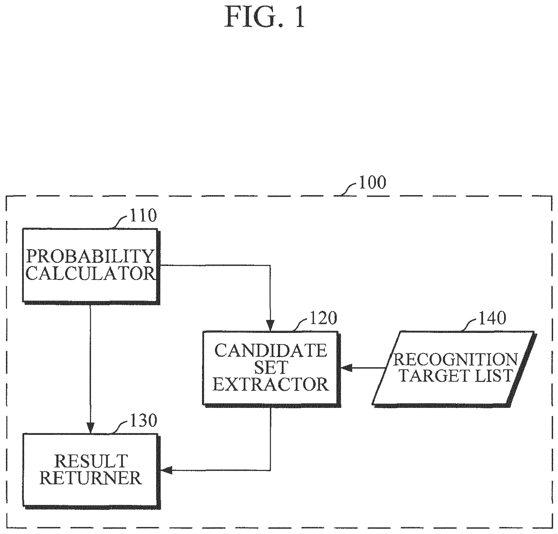

FIG. 1 is a block diagram illustrating an example of a speech recognition apparatus.

Referring to FIG. 1, the speech recognition apparatus 100 includes a probability calculator 110, a candidate set extractor 120, and a result returner 130.

The probability calculator 110 calculates probabilities of each phoneme of an audio signal using an acoustic model. A phoneme is the smallest unit of sound that is significant in a language.

In one example, the audio signal is converted into an audio frame by a preprocessing process of extracting characteristics, and is input to an acoustic model. The acoustic model divides an audio frame into phonemes, and outputs probabilities of each phoneme.

A general acoustic model based on a Gaussian Mixture Model (GMM), a Deep Neural Network (DNN), or a Recurrent Neural Network (RNN) is trained in a manner that maximizes the probability of phonemes of each frame that are output as an answer.

However, since it is difficult to construct an HMM decoder that can operate in an embedded environment, the acoustic model in this example is built using a Recurrent Neural Network (RNN) and Connectionist Temporal Classification (CTC). In this case, the acoustic model is trained in a manner that maximizes probabilities of phonemes of each audio frame, with respect to all the combinations of phonemes that may make up an answer sequence, using various learning algorithms such as a CTC learning algorithm. Hereinafter, for convenience of explanation, examples will be described using an acoustic model trained using the CTC learning algorithm, i.e., an acoustic model based on a CTC network.

The following Equation 1 is an example of an algorithm for training an acoustic model based on GMM, DNN, or RNN.

$$p(z \mid x) = \prod_{k=1}^{K} y_k^{z_k} \tag{1}$$

In Equation 1, x represents an input audio signal, y represents probabilities of each phoneme calculated for an audio frame k using an acoustic model, and z represents an answer for the audio frame k.

As described above, a general acoustic model is trained in a manner that maximizes probabilities of phonemes of each audio frame output as an answer.

By contrast, the following Equations 2 and 3 are examples of algorithms for training an acoustic model according to an example of this application.

$$p(\pi \mid x) = \prod_{t=1}^{T} y_{\pi_t}^{t} \tag{2}$$

$$p(\ell|x) = \sum_{\pi \in \mathcal{F}^{-1}(\ell)} p(\pi|x)$$

$$(3)$$

In the above Equations 2 and 3, $\ell$ denotes a phoneme sequence, i.e., a series of phonemes, that is an answer, and $\pi$ denotes any one phoneme sequence that may be an answer. $\mathcal{F}(\pi)$ is a many-to-one function that converts an output sequence $\pi$ of a neural network to a phoneme sequence. For example, if a user says "apple" in 1 second (sec), pronouncing a phoneme /ae/ from 0 to 0.5 sec, a phoneme /p/ from 0.5 to 0.8 sec, and a phoneme /l/ from 0.8 to 1 sec, this will produce an output sequence $\pi$ in frame units (commonly 0.01 sec) of "ae ae ae ae ... p p p p... l l l l" in which the phonemes are repeated. $\mathcal{F}(\pi)$ is a function that removes the repeated phonemes from the output sequence $\pi$ and maps the output sequence $\pi$ to a phoneme sequence /ae p l/.

Acoustic model training is performed in such a manner that a probability $p(\pi|x)$ of generating any one phoneme sequence $\pi$ is calculated according to Equation 2 using a phoneme probability y for an audio frame t calculated using the acoustic model, and a probability of generating the answer $\ell$ is calculated according to Equation 3 by combining probabilities $p(\pi|x)$ calculated according to Equation 2. In this case, the acoustic model training is performed using a back propagation learning method.

The candidate set extractor 120 extracts a candidate set from a recognition target list 140. The recognition target list include a plurality of words or phrases composed of phoneme sequences. The recognition target list 140 is predefined according to various types of devices that include the voice recognition apparatus 100. For example, in the case where the voice recognition apparatus 100 is mounted in a TV, the recognition target list 140 includes various commands to operate the TV, such as a power on/off command, a volume control command, a channel change command, and names of specific programs to be executed.

The candidate set extractor 120 extracts one or more target sequences from the recognition target list 140 according to devices to be operated by a user to generate a candidate set.

The result returner 130 calculates probabilities of generating each candidate target sequence in a candidate set using phoneme probabilities calculated using the acoustic model, and returns a candidate target sequence having the highest probability as a recognition result of an input audio signal.

The result returner 130 calculates probabilities of each candidate target sequence of a candidate set by applying Equations 2 and 3 above, which are algorithms for training the acoustic model.

In this example, since a candidate target sequence that may be an answer is already known, it is possible to calculate probabilities of generating a candidate target sequence using each phoneme probability calculated using the acoustic model. That is, since there is no need to decode a phoneme probability using a general decoding algorithm, such as CTC, a loss of information occurring in the decoding process may be minimized. By contrast, since a candidate target sequence that may be an answer is not known in a general speech recognition environment, it is necessary to perform a decoding process using Equation 1, thereby resulting in a loss of information in the speech recognition process.

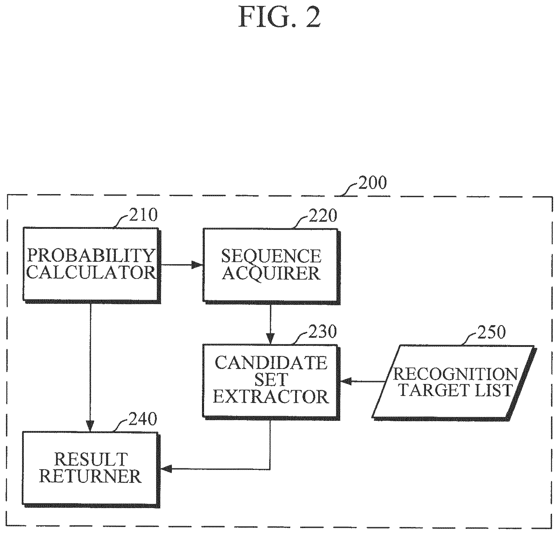

FIG. 2 is a block diagram illustrating another example of a speech recognition apparatus.

Referring to FIG. 2, a speech recognition apparatus 200 includes a probability calculator 210, a sequence acquirer 220, a candidate set extractor 230, and a result returner 240.

The probability calculator 210 calculates probabilities of each phoneme of an audio signal using an acoustic model. As described above, the acoustic model is trained in a manner that maximizes probabilities of phonemes for each audio frame, with respect to all the combinations of phonemes that may make up an answer sequence, using RNN and CTC learning algorithms.

The sequence acquirer 220 acquires a phoneme sequence that is a series of phonemes based on the phoneme probabilities calculated by the probability calculator 210. In this case, the sequence acquirer 220 acquires one or more phoneme sequences by decoding the calculated probabilities of phonemes using a decoding algorithm, such as a best path decoding algorithm or a prefix search decoding algorithm. However, the decoding algorithm is not limited to these examples.

The candidate set extractor 230 generates a candidate set by extracting one or more candidate target sequences from a recognition target list 250 based on the phoneme sequence. As described above, the recognition target list 250 includes target sequences, such as words/phrases/commands, that are predefined according to the types of electronic devices including the speech recognition apparatus 200. Further, the recognition target list 250 may further include information associated with usage rankings (e.g., a usage frequency, a usage probability, etc.) of the target sequences.

In one example, the candidate set extractor 230 extracts all or some of the target sequences as a candidate set depending on the number of target sequences included in the recognition target list 250. In this case, a specific number of target sequences may be extracted as a candidate set based on the information associated with the usage rankings of the target sequences.

In another example, the candidate set extractor 230 calculates similarities by comparing one or more phoneme sequences acquired by the sequence acquirer 220 with each target sequence included in the recognition target list 250, and based on the similarities, extracts a specific number of phoneme sequences as candidate target sequences. In one example, the candidate set extractor 230 calculates similarities between phoneme sequences and target sequences using a similarity calculation algorithm including an edit distance algorithm, and based on the similarities, extracts a specific number of phoneme sequences (e.g., the top 20 sequences) as candidate target sequences in order of similarity.

In this manner, by controlling the number of candidate target sequences to be included in a candidate set with a similarity algorithm, the result returner 240 calculates the probability of generating each candidate target sequence with reduced time, thereby enabling rapid return of a final recognition result.

The result returner 240 returns, as a recognition result of an audio signal, at least one candidate target sequence in a candidate set using phoneme probabilities calculated using the acoustic model.

In one example, the result returner 240 calculates similarities between one or more acquired phoneme sequences and each candidate target sequence in a candidate set using a similarity calculation algorithm including an edit distance algorithm, and returns a candidate target sequence having the highest similarity as a recognition result.

In another example, the result returner 240 calculates probabilities of generating each candidate target sequence in a candidate set by applying phoneme probabilities calculated by the probability calculator 210 to probability calculation algorithms, such as Equations 2 and 3, and returns a candidate target sequence having the highest probability as a final recognition result.

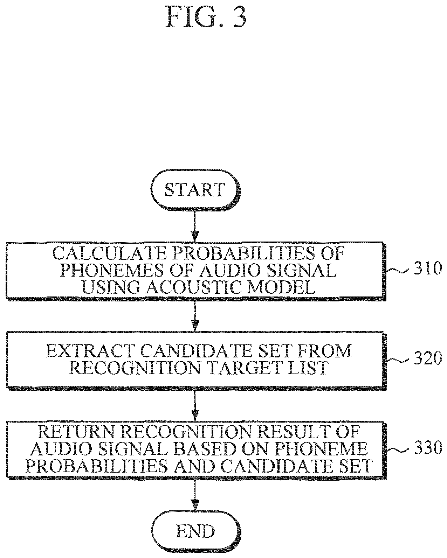

FIG. 3 is a flowchart illustrating an example of a speech recognition method.

FIG. 3 is an example of a speech recognition method performed by the speech recognition apparatus illustrated in FIG. 1.

Referring to FIG. 3, the speech recognition apparatus 100 calculates probabilities of phonemes of an audio signal using an acoustic model in 310. In this case, the audio signal is converted into audio frames by a preprocessing process, and the audio frames are input to the acoustic model. The acoustic model divides each audio frame into phonemes, and outputs probabilities of each phoneme. As described above, an acoustic model is trained by combining a Recurrent Neural Network (RNN) and Connectionist Temporal Classification (CTC). The acoustic model is trained using algorithms of Equations 2 and 3 above.

Subsequently, a candidate set that includes one or more candidate target sequences is extracted from a recognition target list in 320. The recognition target list includes target sequences, such as words or phrases, that are predefined according to various devices. For example, in TVs, the target sequences may include commands for controlling the TV, such as a power on/off command, a volume control command, and a channel change command. Further, in navigation devices, the target sequences may include commands for controlling the navigation device, such as a power on/off command, a volume control command, and a destination search command. In addition, the target sequences may include commands to control various electronic devices mounted in a vehicle. However, the target sequences are not limited to these examples, and may be applied to any electronic device controlled by a user and including speech recognition technology.

Then, a recognition result of an input audio signal is returned based on the calculated phoneme probabilities and the extracted candidate set in 330. In one example, probabilities of generating each candidate target sequence are calculated based on the phoneme probabilities calculated using an acoustic model and algorithms of Equations 2 and 3 above. Further, a candidate target sequence having the highest probability is returned as a final recognition result.

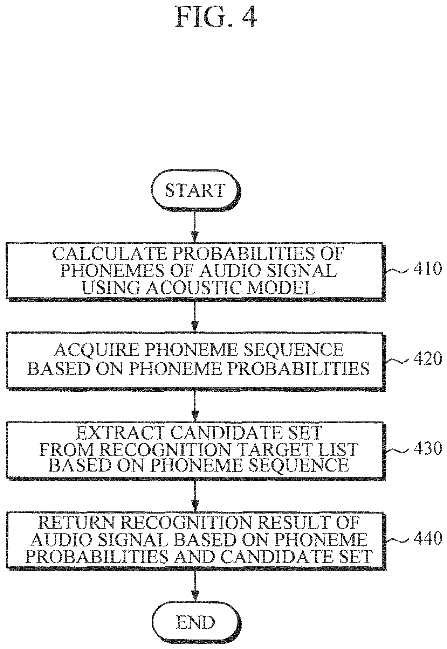

FIG. 4 is a flowchart illustrating an example of a speech recognition method.

Referring to FIG. 4, probabilities of phonemes of an audio signal are calculated using an acoustic model in 410. The acoustic model is trained in a manner that maximizes probabilities of phonemes for each audio frame with respect to all the combinations of phonemes that may make up a phoneme sequence that is an answer using various learning algorithms, e.g., a CTC learning algorithm.

Subsequently, a phoneme sequence, which is a series of phonemes, is acquired based on the calculated phoneme probabilities in 420. For example, one or more phoneme sequences are acquired using a decoding algorithm, such as a best path decoding algorithm or a prefix search decoding algorithm.

Then, a candidate set is generated by extracting one or more candidate target sequences from the recognition target list based on the phoneme sequence in 430. The recognition target list is predefined according to types of electronic devices having including speech recognition technology. In this case, the recognition target list further includes information associated with usage rankings (e.g., a usage frequency, a usage probability, etc.) of each target sequence.

In one example, the speech recognition apparatus extracts all or some of the target sequences as a candidate set depending on the total number of target sequences included in the recognition target list. In the case where there is information associated with usage rankings of target sequences, a predefined number of target sequences may be extracted as a candidate set based on the information.

In another example, the speech recognition apparatus calculates similarities by comparing one or more phoneme sequences acquired by the sequence acquirer 220 with each target sequence included in the recognition target list, and based on the similarities, extracts a specific number of phoneme sequences as candidate target sequences. For example, the speech recognition apparatus calculates similarities between phoneme sequences and target sequences using a similarity calculation algorithm including an edit distance algorithm, and based on the similarities, extracts a specific number of phoneme sequences (e.g., the top 20 sequences) as candidate target sequences in order of similarity.

Then, a recognition result of an audio signal is returned based on the phoneme probabilities calculated using an acoustic model and the candidate set in 440.

In one example, the speech recognition apparatus calculates similarities between one or more acquired phoneme sequences and each candidate target sequence in a candidate set using a similarity calculation algorithm including an edit distance algorithm, and returns a candidate target sequence having the highest similarity as a recognition result.

In another example, the speech recognition apparatus calculates probabilities of generating each candidate target sequence in a candidate set by applying the calculated phoneme probabilities to probability calculation algorithms, such as Equations 2 and 3 above, and returns a candidate target sequence having the highest probability as a final recognition result.

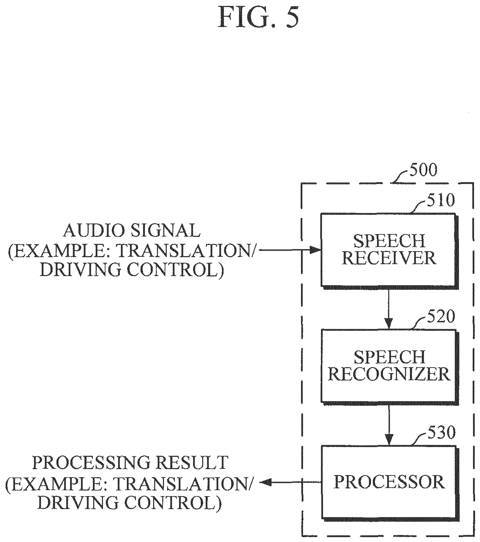

FIG. 5 is a block diagram illustrating an example of an electronic device.

The electronic device 500 includes speech recognition apparatus 100 or 200 described above. The electronic device 500 may be a TV set, a set-top box, a desktop computer, a laptop computer, an electronic translator, a smartphone, a tablet PC, an electronic control device of a vehicle, or any other device that is controlled by a user, and processes a user's various commands by embedded speech recognition technology. However, the electronic device 500 is not limited to these examples, and may be any electronic device that is controlled by a user and includes speech recognition technology.

Referring to FIG. 5, the electronic device 500 includes a speech receiver 510, a speech recognizer 520, and a processor 530. The speech recognizer 520 is the speech recognition apparatus 100 in FIG. 1 or 200 in FIG. 2 that are manufactured as hardware to be implemented in the electronic device 500.

The speech receiver 510 receives a user's audio signal input through a microphone of the electronic device 500. As illustrated in FIG. 5, the user's audio signal may be phrases to be translated into another language, or may be commands for controlling a TV set, driving a vehicle, or controlling any other device that is controlled by a user.

In one example, the speech receiver 510 performs a preprocessing process in which an analog audio signal input by a user is converted into a digital signal, the signal is divided into a plurality of audio frames, and the audio frames are transmitted to the speech recognizer 520.

The speech recognizer 520 inputs an audio signal, e.g., audio frames, to an acoustic model, and calculates probabilities of phonemes of each audio frame. Once the phoneme probabilities of the audio frame are calculated, the speech recognizer 520 extracts a candidate set from a recognition target list based on the calculated phoneme probabilities, and returns a final recognition result based on the calculated phoneme probabilities and the extracted candidate set. The acoustic model is a network based on a Recurrent Neural Network (RNN) or a Deep Neural Network (DNN), and is trained in a manner that maximizes probabilities of phonemes of each audio frame with respect to all the combinations of phonemes that may make up an answer sequence using a CTC learning algorithm.

The recognition target list is predefined according to the types and purposes of the electronic device 500 that includes speech recognition technology. For example, in a case in which the voice recognition apparatus 100 is mounted in a TV set, various words or commands, such as a power on/off command, a volume control command, and a channel change command, that are frequently used for TVs are defined in the recognition target list. Further, in a case in which the electronic device 500 is a navigation device mounted in a vehicle, various commands, such as a power on/off command, a volume control command, and a destination search command, that are use to control the navigation device are defined in the recognition target list.

The speech recognizer 520 acquires phoneme sequences based on phoneme probabilities using a general decoding algorithm (e.g., CTC) for speech recognition, and extracts a candidate set by comparing the acquired phoneme sequences with the recognition target list. In this case, the speech recognizer 520 calculates similarities between the acquired phoneme sequences and each target sequence included in the recognition target list using a similarity calculation algorithm including an edit distance algorithm, and based on the similarities, generates a candidate set by extracting a specific number of phoneme sequences as candidate target sequences in order of similarity.

The speech recognizer 520 returns, as a final recognition result, one candidate target sequence in the candidate set extracted based on the calculated phoneme probabilities. In this case, the speech recognizer 520 returns, as a final recognition result, a candidate target sequence having the highest probability among the probabilities of generating each candidate target sequence in a candidate set. In one example, the speech recognizer 520 outputs the final recognition result in a text format.

The processor 530 performs an operation in response to the final recognition result. For example, the processor 530 outputs the recognition result of speech input by a user in voice from a speaker, headphones, or any other audio output device, or provides the recognition result in a text format on a display. Further, the processor 530 performs operations to process commands (e.g., a power on/off command, a volume control command, etc.) to control TVs, set-top boxes, home appliances, electronic control devices of a vehicle, or any other devices that are controlled by a user.

Further, in the case of translating the final recognition result into another language, the processor 530 translates the final recognition result output in a text format into another language, and outputs the translated result in voice or in a text format. However, the processor 530 is not limited to these examples, and may be used in various applications.

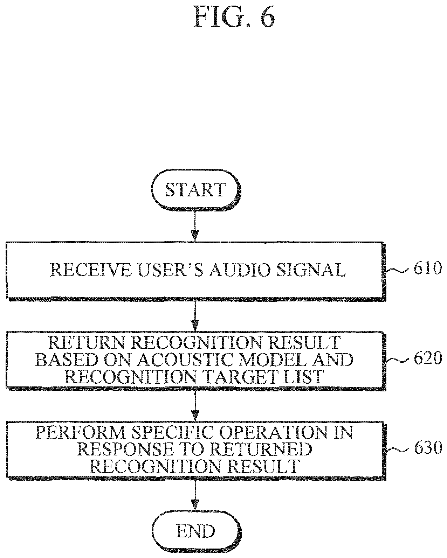

FIG. 6 is a flowchart illustrating an example of a speech recognition method in the electronic device.

The electronic device 500 receives, through a microphone or any other audio input device, a user's audio signal containing phrases to be translated into another language, or commands for controlling TVs or driving a vehicle, in 610. Further, once the user's audio signal is received, the electronic device 500 converts the analog audio signal into a digital signal, and performs a preprocessing process of dividing the digital signal into a plurality of audio frames.

Then, the electronic device 500 returns a final recognition result of the input audio signal based on the pre-stored acoustic model and a predefined recognition target list in 620.

For example, the electronic device 500 inputs an audio frame to an acoustic model to calculate probabilities of phonemes of audio frames. Further, once the probabilities of phonemes of audio frames have been calculated, the electronic device 500 extracts a candidate set from the recognition target list based on the calculated probabilities of phonemes, and returns a final recognition result based on the calculated phoneme probabilities and the extracted candidate set. The acoustic model is a network based on a Recurrent Neural Network (RNN) or a Deep Neural Network (DNN), and is trained using a CTC learning algorithm. The recognition target list is predefined according to the types and purposes of the electronic device 500 that includes speech recognition technology.

In one example, the electronic device 500 acquires phoneme sequences from the calculated phoneme probabilities, and extracts a candidate set by comparing the acquired phoneme sequences with the recognition target list. In this case, the electronic device 500 calculates similarities between the acquired phoneme sequences and each target sequence included in the recognition target list using a similarity calculation algorithm including an edit distance algorithm, and based on the similarities, generates a candidate set by extracting a specific number of phoneme sequences as candidate target sequences in order of similarity.

The electronic device 500 calculates probabilities of generating each candidate target sequence using Equations 2 and 3 above, and returns a candidate target sequence having the highest probability as a final recognition result, which may be converted into a text format by the electronic device 500.

Subsequently, the electronic device 500 performs an operation in response to the returned final recognition result in 630.

For example, the electronic device 500 may output the recognition result of speech input by a user in voice from a speaker, headphones, or any other audio output device, or provides the recognition result in a text format on a display. Further, the electronic device 500 may perform operations to process commands to control TVs, set-top boxes, home appliances, electronic control devices of a vehicle, and any other devices that are controlled by a user. In addition, the electronic device 500 may translate the final recognition result output in a text format into another language, and may output the translated result in voice or in a text format. However, the electronic device 500 is not limited to these examples, and may be used in various applications.

The speech recognition apparatus 100, the probability calculator 110, the candidate set extractor 120, and the result returner illustrated in FIG. 1, the speech recognition apparatus 100, the probability calculator 110, the candidate set extractor 120, and the result returner 130 illustrated in FIG. 1, the speech recognition apparatus 200, the probability calculator 210, the sequence acquirer 220, the candidate set extractor 230, and the result returner 240 illustrated in FIG. 2, the electronic device 500, the speech receiver 510, the speech recognizer 520, and the processor 530 illustrated in FIG. 5 that perform the operations described herein with respect to FIGS. 1-6 are implemented by hardware components. Examples of hardware components include controllers, sensors, generators, drivers, memories, comparators, arithmetic logic units, adders, subtractors, multipliers, dividers, integrators, and any other electronic components known to one of ordinary skill in the art. In one example, the hardware components are implemented by computing hardware, for example, by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 1-6. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 3, 4, and 6 that perform the operations described herein with respect to FIGS. 1-6 are performed by computing hardware, for example, by one or more processors or computers, as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A speech recognition method comprising:

> receiving an analog audio signal input by a user;
> converting the analog audio signal into a digital signal;
> dividing the digital signal into a plurality of audio frames;
> calculating (310, 410) probabilities of phonemes of each audio frame using an acoustic model;
> acquiring (420) phoneme sequences based on the phoneme probabilities;
> calculating similarities between the acquired phoneme sequences and each target sequence included in a recognition target list (140, 250), wherein the target sequences in the recognition target list (140, 250) are predefined for each device according to types of devices to be operated, and wherein the recognition target list further includes information on a usage frequency and a usage probability of each target sequence;
> extracting (320, 430) a candidate set from the recognition target list in order of similarity; and
> returning (330, 440) a recognition result of the audio signal based on the calculated phoneme probabilities and the extracted candidate set.

**2.** The method of claim 1, wherein the acoustic model is trained using a learning algorithm comprising Connectionist Temporal Classification, CTC.

**3.** The method of claim 1 or 2, wherein the returning of the recognition result comprises:

calculating probabilities of generating each target sequence included in the candidate set based on the calculated phoneme probabilities; and
returning a candidate target sequence having a highest probability among the calculated probabilities of generating each target sequence as the recognition result.

**4.** The method of one of claims 1 to 3, wherein the acquiring of the phoneme sequence comprises acquiring the phoneme sequence based on the calculated phoneme probabilities using a best path decoding algorithm or a prefix search decoding algorithm.

**5.** The method of one of claims 1 to 4, wherein the calculating of the similarities comprises calculating the similarities using a similarity algorithm comprising an edit distance algorithm.

**6.** An electronic device (500) comprising:

a speech receiver (510) configured to receive an analog audio signal of a user, convert the analog audio signal into a digital signal, divide the digital signal into a plurality of audio frames, and transmit the plurality of audio frames to a speech recognizer (100, 200, 520);
the speech recognizer (100, 200, 520) comprising:

a probability calculator (110, 210) configured to calculate probabilities of phonemes of each of the received audio frames using an acoustic model,
a sequence acquirer (220) configured to acquire phoneme sequences based on the calculated phoneme probabilities,
a candidate set extractor (120, 230) configured to calculate similarities between the acquired phoneme sequences and each target sequence included in a recognition target list (140, 250), wherein the target sequences in the recognition target list (140, 250) are predefined for the device according to the type of the device and extract a candidate set from the recognition target list in order of similarity, and wherein the recognition target list further includes information on a usage frequency and a usage probability of each target sequence; and
a result returner (130, 240) configured to return any one of target sequences included in the recognition target list (140, 250) as a recognition result based on the calculated phoneme probabilities and the extracted candidate set; and
a processor (530) configured to perform an operation in response to the returned recognition result.

**7.** The electronic device of claim 6, wherein the speech recognizer is further configured to extract a candidate set from the recognition target list, calculate probabilities of generating each candidate target sequence included in the candidate set based on the calculated phoneme probabilities, and return a candidate target sequence having a highest probability among the calculated probabilities of generating each target sequence as the recognition result.

**8.** The electronic device of claim 6 or 7, wherein the speech recognizer is further configured to acquire a phoneme sequence by decoding the phoneme probabilities.

**9.** The electronic device of one of claims 6 to 8, wherein the processor is further configured to output the recognition result in a voice from a speaker, or in a text format on a display,
wherein the processor is further configured to translate the recognition result into another language, and output the translated result in the voice from the speaker, or in the text format on the display.

**10.** The electronic device of one of claims 6 to 9, wherein the processor is further configured to process commands comprising one or more of a power on/off command, a volume control command, a channel change command, and a destination search command in response to the recognition result.

**11.** A computer-readable medium having instructions that, when performed by a processor cause the processor to perform a speech recognition method, comprising:

receiving an analog audio signal input by a user;

converting the analog audio signal into a digital signal;

dividing the digital signal into a plurality of audio frames;

calculating probabilities of phonemes of each audio frame;

obtaining phoneme sequences based on the phoneme probabilities;

calculating similarities between the obtained phoneme sequences and each target sequence included in a recognition target list (140, 250), wherein the target sequences in the recognition target list (140, 250) are predefined for each device according to types of devices to be operated, and wherein the recognition target list further includes information on a usage frequency and a usage probability of each target sequence;

extracting a candidate set from the recognition target list in order of similarity; and

recognizing one of the candidate sequences of speech units as corresponding to the audio signal based on the calculated probabilities and the extracted candidate set.

12. The computer-readable medium of claim 11, wherein the calculating of the probabilities comprises calculating the probabilities using an acoustic model.

13. The computer-readable medium of claim 11 or 12, wherein the speech units are phonemes.

14. The computer-readable medium of one of claims 11 to 13, wherein the candidate sequences of speech units are phrases,

wherein the phrases are commands to control an electronic device.

15. The computer-readable medium of one of claims 11 to 14, wherein the recognizing of the one of the candidate sequences of speech units comprises:

calculating probabilities of generating each of the candidate sequences of speech units based on the probabilities that portions of the audio signal correspond to the speech units; and

recognizing one of the candidate sequences of speech units having a highest probability among the probabilities of generating each of the candidate sequences of speech units as corresponding to the audio signal.

**Patentansprüche**

1. Spracherkennungsverfahren, mit:

Empfangen eines analogen Audiosignals, das von einem Benutzer eingegeben wird;

Umwandeln des analogen Audiosignals in ein digitales Signal;

Unterteilen des digitalen Signals in mehrere Audio-Blöcke;

Berechnen (310, 410) von Wahrscheinlichkeiten von Phonemen jedes Audio-Blocks unter Verwendung eines akustischen Modells;

Erhalten (420) von Phonemsequenzen auf der Grundlage der Phonemwahrscheinlichkeiten;

Berechnen von Ähnlichkeiten zwischen den erhaltenen Phonemsequenzen und jeder Sollsequenz, die in einer Erkennungssollliste (140, 250) enthalten ist, wobei die Sollsequenzen in der Erkennungssollliste (140, 250) für jede Einrichtung entsprechend den Arten von Einrichtungen, die zu betreiben sind, vordefiniert sind, und wobei die Erkennungssollliste ferner Information über eine Nutzungshäufigkeit und eine Nutzungswahrscheinlichkeit jeder Sollsequenz enthält;

Extrahieren (320, 430) einer Kandidatengruppe aus der Erkennungssollliste, geordnet nach Ähnlichkeit; und

Zurückgeben (330, 440) eines Erkennungsergebnisses des Audiosignals auf der Grundlage der berechneten Phonemwahrscheinlichkeiten und der extrahierten Kandidatengruppe.

2. Verfahren nach Anspruch 1, wobei das akustische Modell unter Anwendung eines Lernalgorithmus, der eine konnektionistische temporale Klassifikation, CTC, umfasst, eingeübt wird.

3. Verfahren nach Anspruch 1 oder 2, wobei das Zurückgeben des Erkennungsergebnisses umfasst:

Berechnen von Wahrscheinlichkeiten des Erzeugens jeder Sollsequenz, die in der Kandidatengruppe enthalten ist, auf der Grundlage der berechneten Phonemwahrscheinlichkeiten; und

Zurückgeben, als das Erkennungsergebnis, einer Kandidatensollsequenz mit einer höchsten Wahrscheinlichkeit aus den berechneten Wahrscheinlichkeiten des Erzeugens jeder Sollsequenz.

4. Verfahren nach einem der Ansprüche 1 bis 3, wobei das Erhalten der Phonemsequenz umfasst: Erhalten der Phonemsequenz auf der Grundlage der berechneten Phonemwahrscheinlichkeiten unter Anwendung eines Algorithmus des Decodierens eines besten Wegs oder eines Präfix-Such-Decodieralgorithmus.

5. Verfahren nach einem der Ansprüche 1 bis 4, wobei das Berechnen der Ähnlichkeiten umfasst: Berechnen der Ähnlichkeiten unter Anwendung eines Ähnlichkeitsalgorithmus, der einen Editierabstandsalgorithmus umfasst.

6. Elektronische Einrichtung (500), mit:

einem Sprachempfänger (510), der ausgebildet ist, ein analoges Audiosignal eines Benutzers zu empfangen, das analoge Audiosignal in ein digitales Signal umzuwandeln, das digitale Signal in mehrere Audio-Blöcke zu unterteilen und die mehreren Audio-Blöcke an eine Spracherkennungseinheit (100, 200, 520) zu übertragen; wobei die Spracherkennungseinheit (100, 200, 520) aufweist:

eine Wahrscheinlichkeitsberechnungseinheit (110, 210), die ausgebildet ist, Wahrscheinlichkeiten von Phonemen jedes empfangenen Audio-Blocks unter Anwendung eines akustischen Modells zu berechnen, eine Sequenzerfassungseinheit (220), die ausgebildet ist, Phonemsequenzen auf der Grundlage der berechneten Phonemwahrscheinlichkeiten zu erhalten, eine Kandidatengruppenextrahiereinheit (120, 230), die ausgebildet ist, Ähnlichkeiten zwischen den erhaltenen Phonemsequenzen und jeder Sollsequenz, die in einer Erkennungssollliste (140, 250) enthalten ist, zu berechnen, wobei die Sollsequenzen in der Erkennungssollliste (140, 250) für die Einrichtung entsprechend der Art der Einrichtung vordefiniert sind, und eine Kandidatengruppe aus der Erkennungssollliste nach Ähnlichkeit geordnet zu extrahieren, und wobei die Erkennungssollliste ferner Information über eine Nutzungshäufigkeit und eine Nutzungswahrscheinlichkeit jeder Sollsequenz enthält; und eine Ergebnisrückgabeeinheit (130, 240), die ausgebildet ist, eine Sollsequenz, die in der Erkennungssollliste (140, 250) enthalten ist, als Erkennungsergebnis auf der Grundlage der berechneten Phonemwahrscheinlichkeiten und der extrahierten Kandidatengruppe zurückzugeben; und einen Prozessor 8530), der ausgebildet ist, eine Operation in Reaktion auf das zurückgegebene Erkennungsergebnis auszuführen.

7. Elektronische Einrichtung nach Anspruch 6, wobei die Spracherkennungseinheit ferner ausgebildet ist, eine Kandidatengruppe aus der Erkennungssollliste zu extrahieren, Wahrscheinlichkeiten des Erzeugens jeder Kandidatensollsequenz, die in der Kandidatengruppe enthalten ist, auf der Grundlage der berechneten Phonemwahrscheinlichkeiten zu berechnen und eine Kandidatensollsequenz mit einer höchsten Wahrscheinlichkeit aus den berechneten Wahrscheinlichkeiten des Erzeugens jeder Sollsequenz als das Erkennungsergebnis zurückzugeben.

8. Elektronische Einrichtung nach Anspruch 6 oder 7, wobei die Spracherkennungseinheit ferner ausgebildet ist, eine Phonemsequenz durch Decodieren der Phonemwahrscheinlichkeiten zu erhalten.

9. Elektronische Einrichtung nach einem der Ansprüche 6 bis 8, wobei der Prozessor ferner ausgebildet ist, das Erkennungsergebnis als Sprache aus einem Lautsprecher oder in einem Textformat auf einer Anzeige auszugeben, wobei der Prozessor ferner ausgebildet ist, das Erkennungsergebnis in eine weitere Sprache zu übersetzen und das übersetzte Ergebnis als Sprache aus dem Lautsprecher oder in Textformat auf der Anzeige auszugeben.

10. Elektronische Einrichtung nach einem der Ansprüche 6 bis 9, wobei der Prozessor ferner ausgebildet ist, in Reaktion auf das Erkennungsergebnis Befehle zu verarbeiten, die umfassen: einen Einschalt/Ausschaltbefehl und/oder einen Lautstärkesteuerbefehl und/oder einen Kanaländerungsbefehl und/oder einen Zielsuchbefehl.

11. Computerlesbares Medium mit Befehlen, die bei Ausführung durch einen Prozessor bewirken, dass der Prozessor ein Spracherkennungsverfahren ausführt, mit:

Empfangen eines analogen Audiosignals, das von einem Benutzer eingegeben wird;
Umwandeln des analogen Audiosignals in ein digitales Signal;
Unterteilen des digitalen Signals in mehrere Audio-Blöcke;
Berechnen von Wahrscheinlichkeiten von Phonemen jedes Audio-Blocks;
Erhalten von Phonemsequenzen auf der Grundlage der Phonemwahrscheinlichkeiten;

Berechnen von Ähnlichkeiten zwischen den erhaltenen Phonemsequenzen und jeder Sollsequenz, die in einer Erkennungssollliste (140, 250) enthalten ist, wobei die Sollsequenzen in der Erkennungssollliste (140, 250) für jede Einrichtung entsprechend einer Art der Einrichtung, die zu betreiben ist, vordefiniert sind, und wobei die Erkennungssollliste ferner Information über eine Nutzungshäufigkeit und eine Nutzungswahrscheinlichkeit jeder Sollsequenz enthält;

Extrahieren einer Kandidatengruppe aus der Erkennungssollliste, geordnet nach Ähnlichkeit; und

Erkennen einer der Kandidatensequenzen aus Spracheinheiten als zugeordnete Sequenz zu dem Audiosignal auf der Grundlage der berechneten Wahrscheinlichkeiten und der extrahierten Kandidatengruppe.

**12.** Computerlesbares Medium nach Anspruch 11, wobei das Berechnen der Wahrscheinlichkeiten umfasst: Berechnen der Wahrscheinlichkeiten unter Anwendung eines akustischen Modells.

**13.** Computerlesbares Medium nach Anspruch 11 oder 12, wobei die Spracheinheiten Phoneme sind.

**14.** Computerlesbares Medium nach einem der Ansprüche 11 bis 13, wobei die Kandidatensequenzen aus Spracheinheiten Phrasen sind,

wobei die Phrasen Befehle zur Steuerung einer elektronischen Einrichtung sind.

**15.** Computerlesbares Medium nach einem der Ansprüche 11 bis 14, wobei das Erkennen einer der Kandidatensequenzen aus Spracheinheiten umfasst:

Berechnen von Wahrscheinlichkeiten des Erzeugens jeder der Kandidatensequenzen aus Spracheinheiten auf der Grundlage der Wahrscheinlichkeiten von Bereichen des Audiosignals, die den Spracheinheiten entsprechen; und

Erkennen einer der Kandidatensequenzen aus Spracheinheiten mit einer höchsten Wahrscheinlichkeit aus den Wahrscheinlichkeiten des Erzeugens jeder der Kandidatensequenzen aus Spracheinheiten als eine Sequenz, die dem Audiosignal entspricht.

**Revendications**

**1.** Procédé de reconnaissance de la parole comprenant les opérations suivantes:

recevoir un signal audio analogique entré par un utilisateur;

convertir le signal audio analogique en un signal numérique;

diviser le signal numérique en une pluralité de trames audio;

calculer (310, 410) des probabilités de phonèmes de chaque trame audio en utilisant un modèle acoustique;

acquérir (420) des séquences de phonèmes sur la base des probabilités de phonèmes;

calculer des similitudes entre les séquences de phonèmes acquises et chaque séquence cible incluse dans une liste de cibles de reconnaissance (140, 250), les séquences de cibles de la liste de cibles de reconnaissance (140, 250) étant prédéfinies pour chaque dispositif en fonction des types d'appareils à utiliser, et dans lequel la liste de cibles de reconnaissance comprend en outre des informations sur une fréquence d'utilisation et une probabilité d'utilisation de chaque séquence cible;

extraire (320, 430) un ensemble candidat parmi la liste de cibles de reconnaissance par ordre de similitude; et

renvoyer (330, 440) un résultat de reconnaissance du signal audio sur la base des probabilités de phonème calculées et de l'ensemble candidat extrait.

**2.** Procédé selon la revendication 1, dans lequel le modèle acoustique est entraîné en utilisant un algorithme d'apprentissage comprenant la classification connexionniste temporelle (CTC).

**3.** Procédé selon les revendications 1 ou 2, dans lequel le retour du résultat de la reconnaissance comprend les opérations suivantes:

calculer des probabilités de générer chaque séquence cible incluse dans l'ensemble candidat sur la base des probabilités de phonèmes calculées; et

renvoyer une séquence cible candidate ayant la probabilité la plus élevée parmi les probabilités calculées de générer chaque séquence cible en tant que résultat de reconnaissance.

4.  Procédé selon l'une quelconque des revendications 1 à 3,
    dans lequel l'acquisition de la séquence de phonèmes comprend l'acquisition de la séquence de phonèmes sur la base des probabilités de phonèmes calculées en utilisant un algorithme de décodage à meilleur chemin ou un algorithme de décodage à recherche de préfixe.

5.  Procédé selon l'une des revendications 1 à 4, dans lequel le calcul des similitudes comprend le calcul des similitudes à l'aide d'un algorithme de similitude comprenant un algorithme de distance d'édition.

6.  Dispositif électronique (500) comprenant:

    un récepteur vocal (510) configuré pour recevoir un signal audio analogique d'un utilisateur, convertir le signal audio analogique en un signal numérique, diviser le signal numérique en une pluralité de trames audio et transmettre la pluralité de trames audio à un dispositif de reconnaissance de la parole (100, 200, 520);
    le dispositif de reconnaissance de la parole (100, 200, 520) comprenant:

    un calculateur de probabilité (110, 210) configuré pour calculer des probabilités de phonèmes de chacune des trames audio reçues à l'aide d'un modèle acoustique,
    un acquéreur de séquence (220) configuré pour acquérir des séquences de phonèmes sur la base des probabilités de phonèmes calculées,
    un extracteur d'ensembles candidats (120, 230) configuré pour calculer des similitudes entre les séquences de phonèmes acquises et chaque séquence cible incluse dans une liste de cibles de reconnaissance (140, 250),
    dans lequel les séquences cibles de la liste de cibles de reconnaissance (140, 250) sont prédéfinies pour le dispositif en fonction du type du dispositif et extraient un ensemble candidat à partir de la liste de cibles de reconnaissance par ordre de similitude, et dans lequel la liste de cibles de reconnaissance comprend en outre des informations sur une fréquence d'utilisation et une probabilité d'utilisation de chaque séquence cible; et
    un dispositif de retour de résultat (130, 240) configuré pour renvoyer l'une quelconque des séquences cibles incluses dans la liste de cibles de reconnaissance (140, 250) en tant que résultat de reconnaissance sur la base des probabilités de phonème calculées et de l'ensemble candidat extrait; et
    un processeur (530) configuré pour effectuer une opération en réponse au résultat de reconnaissance renvoyé.

7.  Dispositif électronique selon la revendication 6, dans lequel le dispositif de reconnaissance de la parole est en outre configuré pour extraire un ensemble candidat parmi la liste de cibles de reconnaissance, calculer des probabilités de générer chaque séquence cible candidate incluse dans l'ensemble candidat en fonction des probabilités de phonème calculées, et renvoyer une séquence cible candidate ayant la probabilité la plus élevée parmi les probabilités calculées de générer chaque séquence cible en tant que résultat de reconnaissance.

8.  Dispositif électronique selon les revendications 6 ou 7, dans lequel le dispositif de reconnaissance de la parole est en outre configuré pour acquérir une séquence de phonèmes en décodant les probabilités de phonèmes.

9.  Dispositif électronique selon l'une des revendications 6 à 8, dans lequel le processeur est en outre configuré pour délivrer le résultat de la reconnaissance sous forme de voix provenant d'un haut-parleur ou en format texte sur un écran,
    dans lequel le processeur est en outre configuré pour traduire le résultat de reconnaissance dans une autre langue et pour délivrer le résultat traduit avec la voix du locuteur ou dans le format de texte affiché à l'écran.

10. Dispositif électronique selon l'une des revendications 6 à 9, dans lequel le processeur est en outre configuré pour traiter des commandes comprenant une ou plusieurs commandes parmi: une commande de mise sous/hors tension, une commande de réglage du volume, une commande de changement de canal et une commande de recherche de destination en réaction au résultat de la reconnaissance.

11. Support lisible par ordinateur ayant des instructions qui, lorsqu'elles sont exécutées par un processeur, conduisent le processeur à exécuter un procédé de reconnaissance de la parole, comprenant les opérations suivantes:

    recevoir un signal audio analogique entré par un utilisateur;
    convertir le signal audio analogique en un signal numérique;

diviser le signal numérique en une pluralité de trames audio;

calculer les probabilités de phonèmes de chaque trame audio;

obtenir des séquences de phonèmes sur la base des probabilités de phonèmes;

calculer des similitudes entre les séquences de phonèmes acquises et chaque séquence cible incluse dans une liste de cibles de reconnaissance (140, 250), dans lequel les séquences cibles dans la liste de cibles de reconnaissance (140, 250) sont prédéfinies pour chaque dispositif en fonction des types de dispositifs à utiliser et dans lequel la liste de cibles de reconnaissance comprend en outre des informations sur une fréquence d'utilisation et une probabilité d'utilisation de chaque séquence cible;

extraire un ensemble candidat parmi la liste de cibles de reconnaissance par ordre de similitude; et

reconnaître l'une des séquences candidates d'unités de parole comme correspondant au signal audio sur la base des probabilités calculées et de l'ensemble candidat extrait.

12. Support lisible par ordinateur selon la revendication 11, dans lequel le calcul des probabilités comprend le calcul des probabilités en utilisant un modèle acoustique.

13. Support lisible par ordinateur selon les revendications 11 ou 12, dans lequel les unités de parole sont des phonèmes.

14. Support lisible par ordinateur selon l'une des revendications 11 à 13, dans lequel les séquences candidates d'unités de parole sont des phrases,

dans lequel les phrases sont des commandes permettant de commander un dispositif électronique.

15. Support lisible par ordinateur selon l'une des revendications 11 à 14, dans lequel la reconnaissance de l'une des séquences candidates d'unités de parole comprend les opérations suivantes:

calculer des probabilités de générer chacune des séquences candidates d'unités de parole sur la base des probabilités que des parties du signal audio correspondent aux unités de parole; et

reconnaître l'une des séquences candidates d'unités de parole ayant la probabilité la plus élevée parmi les probabilités de générer chacune des séquences candidates d'unités de parole comme correspondant au signal audio.

# FIG. 1

# FIG. 2

# FIG. 3

```
          ┌─────────┐
          │  START  │
          └────┬────┘
               │
               ▼
┌───────────────────────────────┐
│   CALCULATE PROBABILITIES OF   │
│    PHONEMES OF AUDIO SIGNAL    │─── 310
│      USING ACOUSTIC MODEL      │
└───────────────┬───────────────┘
               │
               ▼
┌───────────────────────────────┐
│   EXTRACT CANDIDATE SET FROM   │─── 320
│    RECOGNITION TARGET LIST     │
└───────────────┬───────────────┘
               │
               ▼
┌───────────────────────────────┐
│   RETURN RECOGNITION RESULT OF │
│  AUDIO SIGNAL BASED ON PHONEME │─── 330
│ PROBABILITIES AND CANDIDATE SET│
└───────────────┬───────────────┘
               │
               ▼
          ┌─────────┐
          │   END   │
          └─────────┘
```

# FIG. 4

START

CALCULATE PROBABILITIES OF
PHONEMES OF AUDIO SIGNAL
USING ACOUSTIC MODEL — 410

ACQUIRE PHONEME SEQUENCE
BASED ON PHONEME PROBABILITIES — 420

EXTRACT CANDIDATE SET
FROM RECOGNITION TARGET LIST
BASED ON PHONEME SEQUENCE — 430

RETURN RECOGNITION RESULT OF
AUDIO SIGNAL BASED ON PHONEME
PROBABILITIES AND CANDIDATE SET — 440

END

# FIG. 5

AUDIO SIGNAL
(EXAMPLE: TRANSLATION/
DRIVING CONTROL)

500

510

SPEECH
RECEIVER

520

SPEECH
RECOGNIZER

530

PROCESSOR

PROCESSING RESULT
(EXAMPLE: TRANSLATION/
DRIVING CONTROL)

# FIG. 6

START

RECEIVE USER'S AUDIO SIGNAL — 610

RETURN RECOGNITION RESULT
BASED ON ACOUSTIC MODEL AND — 620
RECOGNITION TARGET LIST

PERFORM SPECIFIC OPERATION IN
RESPONSE TO RETURNED — 630
RECOGNITION RESULT

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009078665 A